# EUROPEAN PATENT SPECIFICATION

(11) **EP 2 868 510 B1**
(45) Date of publication and mention of the grant of the patent: **01.12.2021**
(21) Application number: 13382433.4
(22) Date of filing: 29.10.2013
(51) Int. Cl.: B60K 35/00, B60K 37/06

(54) **Method and device for handling and presenting information associated with a target value when driving a motor vehicle**
Verfahren zur Handhabung und Darstellung von Informationen im Zusammenhang mit einem zu erreichenden Zielwert bei der Fahrt eines Kraftfahrzeugs
Procédé de manipulation et de présentation des informations associées à une cible lors de la conduite d'un véhicule automobile

(43) Date of publication of application: 06.05.2015
(73) Proprietor: Seat, S.A., 08760 Martorell (ES)
(72) Inventor: Baños, Victor, 08860 Barcelona (ES); Arasa Gaspar, Anna, 08024 Barcelona (ES); Pohl, Diego, 08750 Barcelona (ES)
(74) Representative: Elzaburu S.L.P.

(56) References cited:
- EP-A1- 2 174 838
- DE-A1- 19 755 586
- DE-A1-102012 210 128
- US-B1- 6 497 297
- None

## Description

### OBJECT OF THE INVENTION

The purpose of the patent application herein relates to a method for handling and presenting information associated with a target when driving of a motor vehicle according to claim 1, and that incorporates significant innovations and advantages.

In addition, this patent application also relates to a device for handling and presenting information associated with a target when driving of a motor vehicle according to claim 11.

### BACKGROUND OF THE INVENTION

The screen of the motor vehicle in the centre console of a motor vehicle is usually used as a device for handling and presenting information, such that the user can query the data available for said motor vehicle and operate thereon.

The screen of the car is usually located on the instrument panel of the motor vehicle or in the centre console, therefore being available to both the driver of the motor vehicle and the passenger, and can be viewed by both one or the other. Said method of displaying the motor vehicle information is usually used for adjusting driver assistance variables, and also for navigation systems, for multimedia and/or telematics.

On the other hand, motor vehicle users on occasion want to time, both absolute and partial times, how long it takes to perform a certain target. Said target may be reaching a certain speed, starting from a standstill, in the shortest time possible, or travelling a certain distance in the shortest time possible.

Manual chronometers are known in the state of the art. The disadvantage of these is that the driver needs at least one hand and has to divert his attention from driving in order to handle them, and at the same time pay attention to the speed or distance travelled on the tachometer, which adversely affects safety during driving.

In addition, applications for devices already available on the market, which show different ways of displaying a chronometer designed for competition, are known. Nonetheless, prior knowledge is required for said applications in respect of which circuit will be travelled, said circuit being already digitised and processed such that the starting area, the sections and the target area are known, and by means of the GPS signal from the mobile device, lap times, section time, etc. can be counted.

A speed indicator device for the dashboard of a motor vehicle is also known in the state of the art, according to document ES0236818, that comprises a first indicator means arranged to provide a continuous visual digital indication of the instantaneous speed of the motor vehicle comprising, in association with said first means, a second indicator means arranged to provide a visual indication of the speed range within which the digital indication is found, provided by the first mentioned means, the second automatic indicator means being activated synchronously with the first means.

On the other hand, document GB1401356 of the prior art, describes an electronic display instrument panel that can surround a rear-view mirror in a motor vehicle and which includes a vertical scale showing the vehicle speed in the form of a sequence of lights, the number being proportional to the speed. The lights are formed by incandescent light bulbs or light emitting diodes, and colour masks or LEDs of different colours can be used such that the dots of the different colours are displayed at predetermined speeds. A digital screen in a window indicates the speed, wherein other information can be displayed, at the request of the driver. The warning signal lights are arranged in a strip above the mirror.

It is also known from the state of the art, as per document US6497297, a method for integrated representation of the parameters of an adaptive cruise control device includes the steps of: (a) alphanumerically representing a set, desired speed on a pictorial horizon of the display device; (b) pictographically representing a motor vehicle if a distance sensor group has detected a motor vehicle driving ahead; (c) alphanumerically representing a detected speed of the motor vehicle within the pictographic representation and in accordance with the representing step (b) if the detected speed is less than the set, desired speed; and (d) symbolically representing a traffic lane, a dynamic bar being displayed in the traffic lane, a length of the dynamic bar symbolizing the position relative to the motor vehicle.

It is also known from the state of the art, as per document DE102012210128, a method for determining a control information for indicating a driving state of a vehicle by means of a display device. In one step, a determination of the safe driving condition of the vehicle in which there is no risk of collision with an object and in a further step, a determination of a current driving state of the vehicle in relation to the safe driving condition is performed. In a further step includes determining the control information for driving the display means is based upon the safe driving state and the current driving state, wherein the control information is adapted to a display of information on the current driving state with respect to information about the safe driving condition to effect through the display device.

It is also known from the state of the art, as per document DE19755586, an invention in which, triggered by a computer on board with sensors for a vehicle's operating capacities, details about a vehicle's acceleration are displayed in a display menu, including external temperature, oil temperature, oil pressure, water temperature, compressor pressure, battery voltage, rear axle temperature, internal temperature, maximum allowable speed, distance, traveling time, average speed, acceleration 0-100 and automatic brightness on the display.

It is also known from the state of the art, as per document EP2174838, a driving assistance system for vehicle obtains short-duration data representing a present traveling condition and driving operation and intermediate-duration data representing a traveling condition and driving operation of that day. A drive diagnosis is carried out by comparing a distribution of the short-duration data and a distribution of the intermediate-date, and a drive diagnosis result is evaluated with two evaluation criteria so as to provide an alarm or an operation improvement suggestion.

Therefore, there is still a need for a method for displaying and handling information in a highly visual and intuitive manner on a screen of a motor vehicle, with which the driver can measure their driving capabilities and improve them, without diminishing safety.

### DESCRIPTION OF THE INVENTION

According to the invention herein, this object is achieved by a method and a device for handling and presenting information associated with a target when driving a motor vehicle according to independent claims 1 and 11. Additional advantages of the invention are presented in the dependent claims of the accompanying description below.

The proposed invention is particularly useful for car drivers who on occasion want to time, in both absolute and partial time, how long it takes to carry out a certain target. Said target may be reaching a certain speed starting from a standstill in the shortest time possible, or travelling a certain distance in the shortest time possible, but there can be others, such as engine speed, vehicle acceleration, etc.

The invention herein further has the advantage of being used regardless of the route or road being travelled. Only the target needs to be specified (speed or distance), which does not have to be in a closed circuit, and may be a straight line or a route by road.

Therefore, and according to the invention, the method for handling and presenting information associated with a target when driving a motor vehicle, comprises a control device wherein selectable information is presented on a graphical display device, by means of an input device the target of at least one maximum parameter of the selectable information is entered into said control device, the control device divides the target of the maximum parameter into a plurality of sections. Said sections are preferably subdivisions being essentially equal to each other. In this way, by dividing the target into equal parts, the interactivity of the application and the sporty performance perceived by the driver increases. On the other hand, as the target can be selected, not being restricted to a predetermined number of targets (or circuits as in the prior art) there is greater flexibility for the driver to be able to customise their targets to their usual routes, providing greater freedom of use.

More specifically, at least one parameter is a maximum speed and/or at least a maximum distance. Therefore, the user can set the maximum time it takes to reach a maximum speed as a target, considering the user's skills when handling the pedals. Alternatively, travelling a specific distance in a maximum time can also be set as a target. Said distance may be found at the location selected by the driver, without the method of the invention offering any limitation in respect thereof.

According to another aspect of the invention, the graphical display device displays said sections, such that the driver has a clear view on the screen of the next partial target compared with the total selected target. The sections can be displayed in the form of bars or a similar graph providing greater clarity for the driver-user.

Advantageously, the graphical display device displays said sections in an initial colour that changes to a different colour once the target displayed has been completed. Therefore, the user has a clear perception of the partial course and the prospects of attaining the final target based on achieving the partial targets.

According to another aspect of the invention, the control device receives data from a time-measuring device and from a parameter-measuring device, and presents said data on the graphical display device. Said presentation can be displayed section by section, or continuously in real time, which provides greater precision to the driver. The graphical display device shows the user the information related to the degree to which the target is being achieved, and the time spent attaining said partial target until the target set is reached, which is when the graphical display device keeps the final data in view, for the user to evaluate. The times can be displayed in one colour or another depending on achieving the target or not.

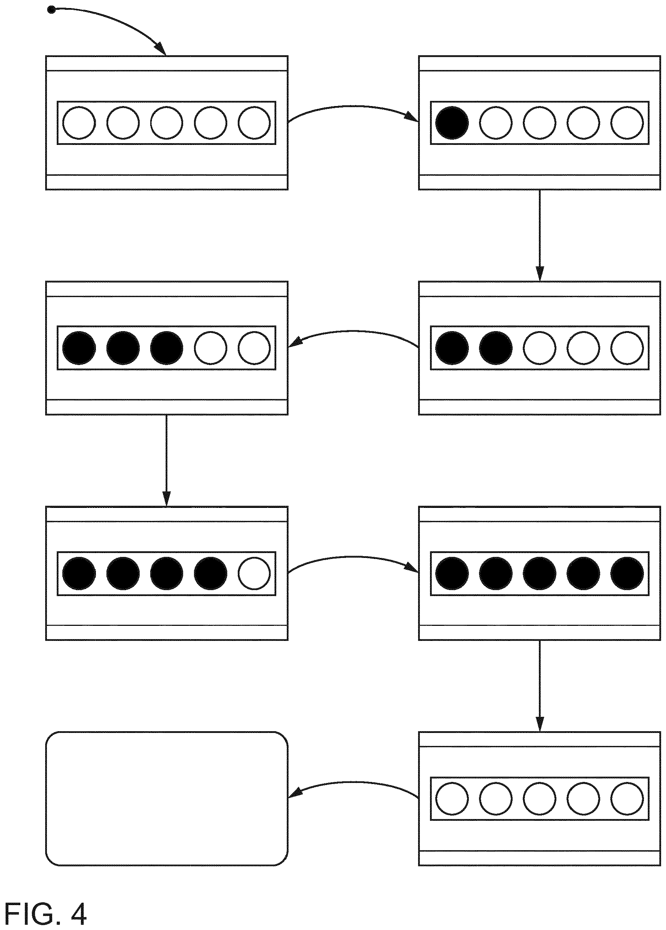

More specifically, the time-measuring device begins measuring the time when the motor vehicle starts to move and/or when the user gives a signal via the input device and/or when the motor vehicle emits a signal. Preferably, the input device may be a touch screen, and the user may press a button on said screen. Alternatively the signal transmitted by the motor vehicle may be audible or visual, like a Formula 1 traffic light (according to Figure 4), producing a sporty and competitive image.

According to another aspect of the invention, the control device stores the measurements of times of at least one previous attempt to achieve at least one target and its corresponding sections in the memory. In this way, a comparison between previous performances by the driver in respect of the current attempt towards achieving the same target can be established.

Advantageously, the control device shows the total time difference data on the graphical display device, for equal targets, from the beginning of the measurement in respect of the best total time stored in the memory at the point of attaining the target and/or the partial time difference data for achieving at least one section in respect of the best partial time stored in the memory of said section at the same point of achieving the target. In this way, the driver has an accurate perception at all times of the rate of improvement or deterioration in respect of the best previous performance recorded in the memory.

In a preferred embodiment of the invention, the graphical display device displays the sections and/or time measurement data in one colour, which changes to one or the other, different from each other and in respect of the initial colour, depending if the time measured for achieving said target and/or section is better or worse than the best time stored in the memory for said target and/or section. In this way the user perceives at a glance if their current attempt is improving or not compared to the best recorded data stored, resulting in improved safety.

In another preferred embodiment of the invention, the control device shows the data related to the total time on the graphical display device, from the beginning of the measurement and/or the partial time for achieving at least one section. In this way, the user additionally has information related to an improvement or not on the best target, specific data related to the time, for the user to evaluate, either while attempting to achieve the target, or at the end, having completed it.

According to another aspect of the invention, by means of the control device at least two images are displayed on the graphical display device, one of said images being a display corresponding to the time the motor vehicle takes in progressing towards achieving the target, the other of said images being a display corresponding to the best time the motor vehicle has stored in the memory for achieving the same target, and the distance between both images being proportional to the magnitude of the difference of said times. In this way, the user has an added competitive impression in respect of his best attempt.

More specifically, the image corresponding to the time the motor vehicle takes in progressing towards achieving a target is a form of a motor vehicle, and that the image corresponding to the best time of the motor vehicle stored in the memory is a form of a shaded, darkened and/or semitransparent motor vehicle. Therefore, the chances of the user getting confused are minimised, in respect of which image represents the driver's progress towards achieving the target relative to his best attempt.

The invention herein also relates to a device for handling and presenting information associated with a target when driving a motor vehicle, comprising at least one control device, at least one graphical display device, at least one time-measuring device, at least one device for measuring a parameter, and a memory, configured such that selectable information is presented on a graphical display device by means of a control device, by means of an input device the target of at least one maximum parameter of the selectable information is entered into said control device, the control device divides the target of the maximum parameter into a plurality of sections. Said sections are subdivisions being essentially equal to each other and there are preferably four. In this way, by dividing the target into equal parts, the interactivity of the application and the sporty performance perceived by the driver increases. On the other hand, as the target can be selected, not being restricted to a predetermined number of targets (or circuits as in the prior art) there is greater flexibility for the driver to be able to customise their targets to their usual routes, providing greater freedom of use.

According to another aspect of the invention, the control device and/or input device and/or memory and/or graphical display device and/or the measuring device for measuring a parameter are integrated in at least one mobile device and/or the motor vehicle. In this way, the origin of the parameters taken may be combined. For example, the speed is taken from the motor vehicle speedometer but the distance travelled is taken from the navigator, both from the motor vehicle and the mobile device.

According to another aspect of the invention, the device is configured such that by means of the control device at least two images are displayed on the graphical display device, one of said images being a display of the time the motor vehicle takes in progressing towards achieving the target, the other of said images being a display of the best time the motor vehicle has stored in the memory for achieving the same target, and the distance between both images being proportional to the magnitude of the difference of times. In this way, the user has an added competitive impression in respect of his best attempt.

The accompanying drawings show, by way of non-limiting example, a method and an associated device for handling and presenting information associated with a target when driving a motor vehicle, formed according to the invention. Other characteristics and advantages of the aforementioned method and associated device, for handling and presenting information associated with a target when driving a motor vehicle, object of the invention herein, will become apparent from the description of a preferred, although not exclusive embodiment, which is illustrated by way of non-limiting example in the drawings appended, in which:

### BRIEF DESCRIPTION OF THE DRAWINGS

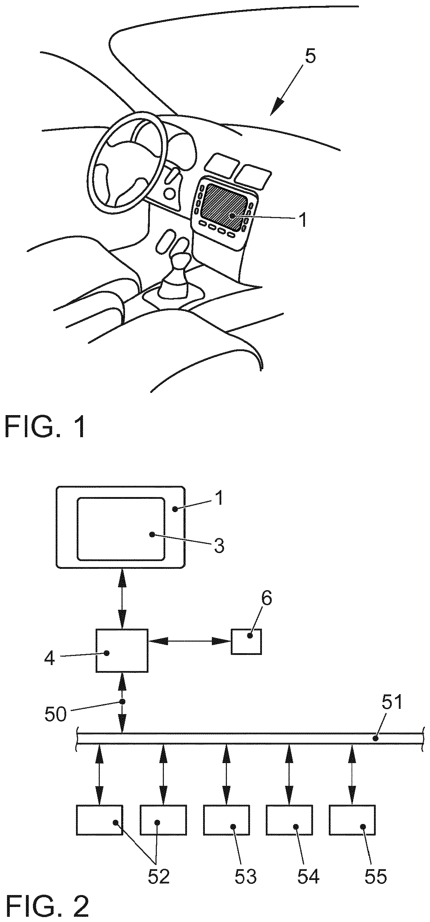

Figure 1.- General front, perspective view of the motor vehicle interface with the user at the dashboard, according to the invention herein;
Figure 2.- Schematic representation of the components and systems involved in the development of the invention herein;
Figure 3A. - View of a method for displaying information associated with a target when driving a motor vehicle, the timers set to zero in the initial position, according to the invention herein;
Figure 3B.- View of a method for displaying information associated with a target when driving a motor vehicle, the timers at an intermediate point in achieving the target, behind in respect of the best time, according to the invention herein;
Figure 3C.- View of a method for displaying information associated with a target when driving a motor vehicle, the timers at an intermediate point in achieving the target, ahead in respect of the best time, according to the invention herein;
Figure 4.- View of a method for displaying the initial screen prior to the commencement of measuring the time as a starting signal, according to the invention herein;
Figure 5A.- General front view of the motor vehicle interface, with the user, integrated in the dashboard, according to the invention herein;
Figure 5B.- General front view of the motor vehicle interface, with the user, on a mobile device in the dashboard, according to the invention herein;
Figure 6A.- View of a method for displaying information associated with a target when driving a motor vehicle, being at an intermediate point in achieving the target and clearly behind in respect of the best time, according to the invention herein;
Figure 6B.- View of a method for displaying information associated with a target when driving a motor vehicle, being at an intermediate point in achieving the target and clearly ahead in respect of the best time, according to the invention herein;
Figure 6C.- View of a method for displaying information associated with a target when driving a motor vehicle, being at an intermediate point in achieving the target and slightly ahead in respect of the best time, according to the invention herein;

### DESCRIPTION OF A PREFERRED EMBODIMENT

In view of the mentioned figures and according to the adopted numbering, an example of a preferred embodiment of the invention can be seen therein, which comprises the parts and elements indicated and described in detail below.

More specifically, the invention relates to a method for displaying and managing information, and a device comprising a graphical display device 1 for displaying information, a control unit 4 with a memory, a speed measuring device 53 and/or a device for measuring the distance travelled 54, and a data input device 3. The data input device 3 may be integrated into the graphical display device 1 like a touch screen. Said touch screen may be integrated in the motor vehicle 5, for example in the centre console, or may be a mobile device 7 separate from the motor vehicle 5, for example, a smartphone, a tablet or a navigator. The speed measuring device 53 and/or distance measuring device 54 may be of the type that are usually installed on the shaft of a motor vehicle 5 or may be a global positioning system integrated in the motor vehicle 5 or the mobile device 7. The control unit 4 may also be integrated in the motor vehicle 5 to form part of the mobile device 7. Communication between the speed measuring device 53 and/or distance measuring device 54, the control unit 4 and the data input devices 3 and for showing information may be via wires, or PCBs or wireless circuit boards.

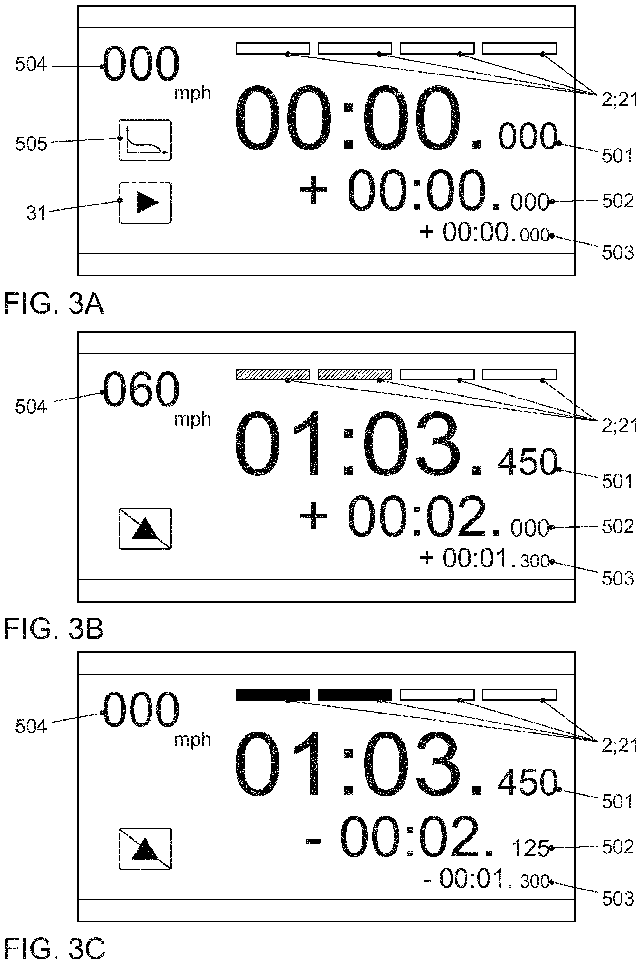

Thus, as shown in Figures 3A, 3B and 3C, the method for handling and presenting information associated with a target when driving a motor vehicle 5, comprises a control device 4 wherein selectable information 2 is presented on a graphical display device 1, by means of an input device 3 the target of at least one maximum parameter of the selectable information 2 is entered into said control device 4, the control device 4 divides the target of the maximum parameter into a plurality of sections 21. Specifically, the sections 21 are equal to each other and there are preferably four.

More particularly, at least one parameter is a maximum speed and/or at least a maximum distance. Therefore, the user inputs the target to be achieved in the shortest possible time, in the form of a maximum speed or a maximum distance, via the data input device 4, for example, to reach 100 km/hr or travel 10 km.

According to another aspect of the invention, as shown in Figures 3A, 3B and 3C, the graphical display device 1 displays said sections 21 in the form of bars or the like. Therefore, the control unit 4 automatically divides said maximum speed or maximum distances in equal segments or sections 21, for example, divided into four sections 21. In this case the sections would be 0-25 km/hr, 25-50 km/hr, 50-75 km/hr and 75-100 km/hr, or either 0-2.5km, 2.5-5km, 5-7.5km and 7.5-10km. These sections are symbolised by elements 21, for example bars, on the screen. Said elements are shown in one colour, for example white, until they have been completed.

More specifically, as shown in Figures 3B and 3C, the graphical display device 1 displays said sections 21 in an initial colour that changes to a different colour once the target displayed has been completed.

According to another aspect of the invention, as shown in Figures 3A, 3B and 3C, the control device 4 receives data 50 from a time measuring device 55 and from a parameter measuring device, and presents said data 50 on the graphical display device 1.

It should be noted that, as shown in Figures 3A and 4, the time measuring device 55 begins measuring the time when the motor vehicle 5 starts to move and/or when the user gives a signal via the input device 3 and/or when the motor vehicle 5 emits a signal. Said signal may be audible or visual, and in the case of being visual, in a particular embodiment, such as a Formula 1 traffic light (being off initially, and all lights being powered on successively until all turn off at once as a departure signal). The input device 3 is preferably a touch screen. Therefore, the time starts running, for example, when the motor vehicle starts to move or after the screen gives a start signal to the driver, or after the driver touches the screen.

According to another aspect of the invention, as seen in Figures 3B and 3C, the control device 4 stores the measurements of times in the memory 6 of at least one previous attempt to achieve at least one target and its corresponding sections 21.

More specifically, as seen in Figures 3B and 3C, the control device 4 shows the total time difference data 502 on the graphical display device 1, for equal targets 50, from the beginning of the measurement in respect of the best total time stored in the memory 6 at the same point when the target is achieved and/or the partial time difference data 50 for achieving at least one section 21 in respect of the best partial time 503 stored in the memory 6 of said section 21 at the same point of achieving the target. Therefore, the control unit 4 has a memory wherein the target times and corresponding sections 21 are stored, such that, when an attempt is made to reach a target equal to another whose time data is already stored, the screen also displays the time difference in respect of all of the absolute time of the best target and/or the best partial time stored.

According to another aspect of the invention, as shown in Figures 3A , 3B and 3C, the graphical display device 1 displays the sections 21 and/or time measurement data 50 in one colour, which changes to one or the other, different from each other and in respect of the initial colour, depending if the time measured for achieving said target and/or section 21 is better or worse than the best time stored in the memory 6 for said target and/or section 21. Therefore, when the speed measurement devices or devices measuring distance travelled detect that a section 21 has been completed, the partial times are taken and stored, and are shown on the screen along with the total time of the chronometer, which is still running. To mark each section 21 as complete, the bars are displayed in a colour that is not grey. In addition, the sections can be displayed in red or green depending on whether the time said section is travelled in is worse or better than the best time stored for said section 21. The time differences can also be displayed in red or green figures if the absolute time or said sector that has been travelled is worse or better than the best absolute time stored or for said section 21. Specifically, figures 3B and 3C show that the first two sections have been travelled, currently performing the third, wherein:
- Section in white: not yet travelled,
- Striped section (red): travelled, time slower than the best recorded.
- Filled section (green): travelled, time faster than the best recorded.

More specifically, as seen in Figures 3B and 3C, the control device 4 shows the data 50 related to the total time 501 on the graphical display device 1, from the beginning of the measurement and/or the partial time for achieving at least one section 21. Therefore, when the speed measurement devices 53 or devices for measuring distance travelled 54 detect that the target has been completed (i.e., all the sections 21), the time on the chronometer stops and is shown on the screen 1. Specifically, by way of non-limiting examples, the following cases are shown in the figures:
Figure 3A
   501 -> Total time
   502 -> Total time difference in respect of the best time
   503 -> Section 21 time difference in respect of the best time
Figure 3B
   502 -> At the end of the 2nd section, the absolute time is 2 seconds and 125 milliseconds slower than the absolute best at the end of the 2nd section.
   Numbers shown in red.
   503 -> The time of the 2nd section is 1 second and 300 milliseconds slower than the best recorded for the 2nd section.
   Numbers shown in red.
Figure 3C
   502 -> At the end of the 2nd section, the absolute time is 2 seconds and 125 milliseconds faster than the absolute best at the end of the 2nd section.
   Numbers shown in green.
   503 -> The time of the 2nd section is 1 second and 300 milliseconds faster than the best recorded for the 2nd section.
   Numbers shown in green.

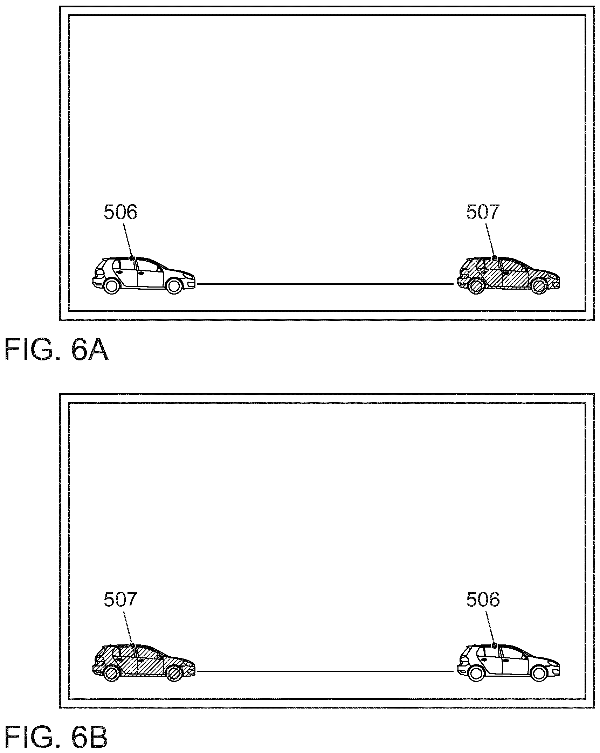

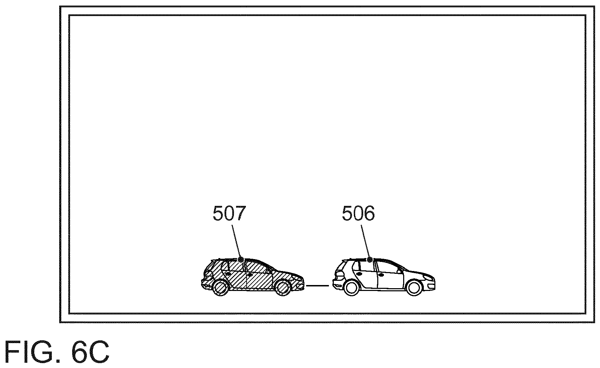

According to another aspect of the invention, as seen in Figures 6A , 6B and 6C, by means of the control device 4 at least two images 506, 507 are displayed on the graphical display device 1, one of said images 506 being a display corresponding to the time the motor vehicle 5 takes in progressing towards achieving the target, the other of said images 507 being a display corresponding to the best time the motor vehicle 5 has stored in the memory 6 for achieving the same target, and the distance between both images 506, 507 being proportional to the magnitude of the difference of said times.

More specifically, as shown in Figures 6A , 6B and 6C, the image 506 corresponding to the time the motor vehicle 5 takes in progressing towards achieving a target is a form of a motor vehicle, and the image 507 corresponding to the best time the motor vehicle 5 has stored in the memory 6 is a form of a shaded, darkened and/or semitransparent motor vehicle. This display can be updated every time a partial target is achieved or can be continuously updated if the progress of time has been stored (recorded) when compared to the speed or the progress of time versus the distance to or throughout the complete target.

In respect of the device for handling and presenting information associated with a target when driving a motor vehicle 5, as shown in Figures 3A, 3B and 3C, it comprises at least one control device 4, at least one graphical display device, at least one time measuring device 55, at least one device for measuring a parameter, and a memory 6, configured such that selectable information 2 is presented on a graphical display device 1 by means of a control device 4, by means of an input device 3 the target of at least one maximum parameter of the selectable information 2 is entered into said control device 4, the control device 4 divides the target of the maximum parameter into a plurality of sections 21.

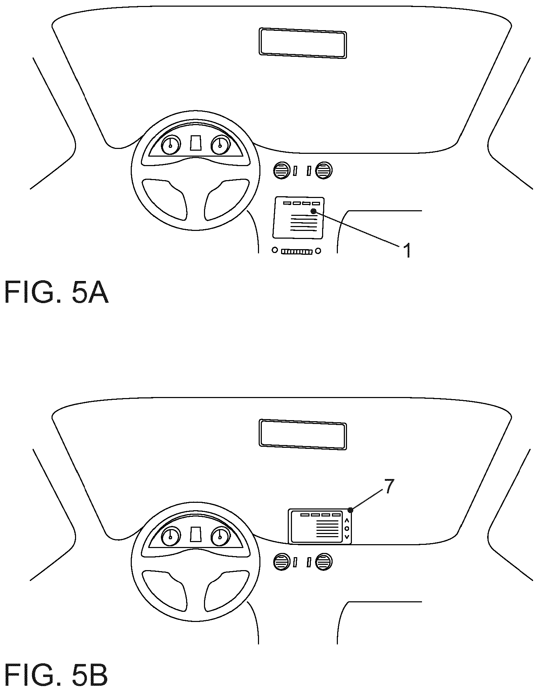

It should be noted that, as shown in Figures 5A and 5B, the control device 4 and/or input device 3 and/or memory 6 and/or graphical display device 1 and/or the measuring device for measuring a parameter are integrated into at least one mobile device 7 and/or the motor vehicle 5. In a particular embodiment, the origin of the parameters taken may be combined. For example, the speed is taken from the motor vehicle 5 speedometer but the distance travelled is taken from the navigator, both from the motor vehicle 5 and the mobile device 7.

It should be noted that by means of the control device 4 at least two images 506, 507 are displayed on the graphical display device 1, one of said images 506 being a display of the time the motor vehicle 5 takes in progressing towards achieving the target, the other of said images 507 being a display of the best time the motor vehicle 5 has stored in the memory 6 for achieving the same target, and the distance between both images 506, 507 being proportional to the magnitude of the difference of times.

The details, shapes and dimensions and other accessory elements as well as the components used in the implementation of the aforementioned method, and associated device for handling and displaying information associated with a target when driving of a motor vehicle may be conveniently replaced by others which do not depart from the scope defined by the claims contained in the list hereinafter.

### List of numerical references:

- (1): Graphical display device (motor vehicle interface screen)
- (2): Selectable information
- (21): Sections
- (3): Input device
- (4): Control device (onboard computer)
- (5): Motor vehicle
- (50): Data
- (501): Total time
- (502): Difference of total time
- (503): Difference of partial time
- (504): Text (speed or distance)
- (505): Graph (statistics)
- (506): Image (real time)
- (507): Image (best time stored in the memory)
- (51): Internal communication channel of the motor vehicle
- (52): Other systems in the motor vehicle
- (53): Device for measuring speed
- (54): Device for measuring distance travelled
- (55): Device for measuring time
- (6): Memory
- (7): Mobile device

## Claims

1. A method for handling and presenting information associated with a target when driving a motor vehicle (5), wherein comprises the steps of:
(i) presenting a selectable information (2) on a graphical display device (1) by means of a control device (4),
(ii) entering a target of at least one maximum parameter of the selectable information (2) into said control device (4) by means of an input device (3),
**characterized in that** it further comprises the steps of:
(iii) dividing the target of the maximum parameter of the selectable information (2) into a plurality of sections (21), by means of the control device (4), wherein the plurality of sections (21) are subdivisions being essentially equal to each other,
(iv) displaying said sections (21)_in the graphical display device (1),
(v) receiving data (50) from a time measuring device (55) and from a parameter measuring device in the control device, and presenting said data (50) on the graphical display device (1),
(vi) detecting that a section (21) has been completed based on the data received from the parameter measuring device,
(vii) storing the partial times obtained by the time measuring device, wherein the partial time is the time for achieving one section (21),
(viii) showing the total time on the graphical display device (1) and showing the partial time on the graphical display device (1).

2. A method according to claim 1, **characterized in that** at least one maximum parameter is a maximum speed and/or at least a maximum distance.

3. A method according to claim 1, **characterized in that** the graphical display device (1) displays said sections (21) in an initial color that changes to a different color once the target displayed has been completed.

4. A method according to claim 1, **characterized in that** the time measuring device (55) begins measuring when the motor vehicle (5) starts to move and/or when the user gives a signal via the input device (3) and/or when the motor vehicle (5) emits a signal.

5. A method according to claim 1, **characterized in that** the control device (4) stores the time readings in the memory (6) of at least one previous attempt to achieve at least one target and its corresponding sections (21).

6. A method according to claim 5, **characterized in that** the control device (4) shows the total time difference data (502) on the graphical display device (1), for equal targets (50), from the beginning of the measurement in respect of the best total time stored in the memory (6) at the same point when the target is achieved and/or the partial time difference data (50) for achieving at least one section (21) in respect of the best partial time (503) stored in the memory (6) of said section (21) at the same point of achieving the target.

7. A method according to any one of the claims 3 or 5, **characterized in that** the graphical display device (1) displays the sections (21) and/or time measurement data (50) in one colour, which changes to one or the other, different from each other and in respect of the initial colour, depending if the time measured for achieving said target and/or section (21) is better or worse than the best time stored in the memory (6) for said target and/or section (21).

8. A method according to any of claims 1 or 5, **characterized in that** the control device (4) presents the data (5) related to the total time (501) on the graphical display device, from the beginning of the measurement and/or the partial time of achieving at least one section (21).

9. A method according to claim 5, **characterized in that** by means of the control device 4 at least two images (506, 507) are displayed on the graphical display device (1), one of said images (506) being a display corresponding to the time the motor vehicle (5) takes in progressing towards achieving the target, the other of said images (507) being a display corresponding to the best time the motor vehicle (5) has stored in the memory (6) for achieving the same target, and the distance between both images (506, 507) being proportional to the magnitude of the difference of said times.

10. A method according to claim 9, **characterized in that** the image (506) corresponding to the time the motor vehicle (5) takes in progressing towards achieving a target is a form of a motor vehicle, and that the image (507) corresponding to the best time the motor vehicle (5) has stored in the memory (6) is a form of a shaded, darkened and/or semitransparent motor vehicle.

11. A device for handling and presenting information associated with a target when driving of a motor vehicle (5), comprising at least one control device (4), at least one graphical display device (1), at least one time measuring device (55), at least one parameter measuring device, and a memory (6), configured such that performs the steps according to claim 1.

12. A device according to claim 11, **characterized in that** the control device (4) and/or input device (3) and/or memory (6) and/or graphical display device (1) and/or the measuring device for measuring a parameter are integrated in at least one mobile device (7) and/or the motor vehicle.

## Patentansprüche

1. Eine Methode zum Verarbeiten und Darstellen von mit einem Ziel verbundenen Daten beim Führen eines Kraftfahrzeugs (5), die folgenden Schritte umfasst:
(i) Darstellen einer auswählbaren Information (2) auf einem grafischen Anzeigegerät (1) mithilfe eines Steuerungsgeräts (4),
(ii) Eingeben eines Ziels für mindestens einen maximalen Parameter der auswählbaren Information (2) in das Steuerungsgerät (4) mit einem Eingabegeräts (3),
**dadurch gekennzeichnet, dass** diese zudem folgende Schritte umfasst:
(iii) Aufteilen des Ziels für den maximalen Parameter der auswählbaren Information (2) in mehrere Abschnitte (21) mit einem Steuerungsgeräts (4), wobei es sich bei den mehreren Abschnitten (21) um im Wesentlichen identische Unterteilungen handelt,
(iv) Anzeigen der Abschnitte (21) auf dem grafischen Anzeigegerät (1),
(v) Abrufen von Daten (50) von einem Zeitmessgerät (55) und von einem Parametermessgerät mit dem Steuerungsgerät sowie Darstellen der Daten (50) auf dem grafischen Anzeigegerät (1),
(vi) beruhend auf den vom Parametermessgerät empfangenen Daten Erkennen, ob ein Abschnitt (21) abgeschlossen ist,
(vii) Speichern der vom Zeitmessgerät abgerufenen Abschnittszeiten, wobei es sich bei der Abschnittszeit um die Zeit für das Abschließen eines Abschnitts (21) handelt,
(viii) Anzeigen der Gesamtzeit auf dem grafischen Gerät (1) und Anzeigen der Abschnittszeit auf dem grafischen Gerät (1).

2. Eine Methode gemäß Anspruch 1, **dadurch gekennzeichnet, dass** es sich bei mindestens einem maximalen Parameter um eine Höchstgeschwindigkeit und/oder um mindestens einen maximalen Abstand handelt.

3. Eine Methode gemäß Anspruch 1, **dadurch gekennzeichnet, dass** das grafische Gerät (1) die Abschnitte (21) in einer ersten Farbe anzeigt, die zu einer anderen Farbe wechselt, sobald das angezeigte Ziel erreicht wurde.

4. Eine Methode gemäß Anspruch 1, **dadurch gekennzeichnet, dass** das Zeitmessgerät (55) mit der Messung beginnt, wenn sich das Kraftfahrzeug (5) in Bewegung setzt, und/oder wenn der Benutzer über das Eingabegerät (3) ein Signal gibt, und/oder wenn das Kraftfahrzeug (5) ein Signal gibt.

5. Eine Methode gemäß Anspruch 1, **dadurch gekennzeichnet, dass** das Steuerungsgerät (4) im Speicher (6) die Zeitwerte mindestens eines vorangegangenen Versuchs speichert, mindestens ein Ziel und dessen entsprechende Abschnitte (21) zu erreichen.

6. Eine Methode gemäß Anspruch 5, **dadurch gekennzeichnet, dass** das Gerät (4) auf dem graphischen Anzeigegerät (1) die Gesamtzeit-Differenzdaten (502) für identische Ziele (50) vom Beginn der Messung an in Bezug auf die beste im Speicher (6) gespeicherte Gesamtzeit zum Zeitpunkt des Erreichens des Ziels und/oder die Abschnittszeit-Differenzdaten (50) für das Erreichen mindestens eines Abschnitts (21) in Bezug auf die beste im Speicher (6) gespeicherte Abschnittszeit (503) für diesen Abschnitt (21) zum Zeitpunkt des Erreichens des Ziels anzeigt.

7. Eine Methode gemäß einem der Ansprüche 3 bis 5, **dadurch gekennzeichnet, dass** das grafische Anzeigegerät (1) die Abschnitte (21) und/oder die Zeitmessungsdaten (50) in einer Farbe anzeigt, die abhängig davon, ob die gemessene Zeit zum Erreichen des Ziels und/oder des Abschnitts (21) besser oder schlechter ist als die im Speicher (6) für das Ziel und/oder den Abschnitt (21) gespeicherte beste Zeit, jeweils zur einen oder anderen Farbe wechselt, die sich von der jeweils anderen sowie von der Ausgangsfarbe unterscheidet.

8. Eine Methode gemäß einem der Ansprüche 1 oder 5, **dadurch gekennzeichnet, dass** das Gerät (4) die Daten (5), die sich auf die Gesamtzeit (501) beziehen, auf dem grafischen Anzeigegerät anzeigt, und zwar ab dem Beginn der Messung und/oder der Abschnittszeit für das Erreichen mindestens eines Abschnitts (21).

9. Eine Methode gemäß Anspruch 5, **dadurch gekennzeichnet, dass** mithilfe des Steuergeräts (4) mindestens zwei Bilder (506, 507) auf dem grafischen Anzeigegerät (1) angezeigt werden, wobei es sich bei einem der Bilder (506) um eine Anzeige handelt, die der Zeit entspricht, die das Kraftfahrzeug (5) benötigt, um sich dem Ziel zu nähern, wobei es sich beim anderen der Bilder (507) um eine Anzeige handelt, die der besten Zeit entspricht, die für das Kraftfahrzeug (5) im Speicher (6) für das Erreichen desselben Ziels gespeichert wurde, und wobei der Abstand zwischen den beiden Bildern (506, 507) proportional zur Größe der Differenz der angeführten Zeiten ist.

10. Eine Methode gemäß Anspruch 9, **dadurch gekennzeichnet, dass** es sich beim Bild (506), das der Zeit entspricht, die das Kraftfahrzeug (5) benötigt, um ein Ziel zu erreichen, um das Profil eines Kraftfahrzeugs handelt, und dass es sich bei dem Bild (507), das der besten Zeit entspricht, die für das Kraftfahrzeug (5) im Speicher (6) gespeichert wurde, um das Profil eines schattierten, abgedunkelten und/oder halbtransparenten Kraftfahrzeugs handelt.

11. Ein Gerät zum Verarbeiten und Darstellen von mit einem Ziel verbundenen Daten beim Führen eines Kraftfahrzeugs (5), das mindestens ein Steuerungsgerät (4), mindestens ein grafisches Anzeigegerät (1), mindestens ein Zeitmessgerät (55), mindestens ein Parametermessgerät und einen Speicher (6) umfasst, um die Schritte gemäß Anspruch 1 durchzuführen.

12. Ein Gerät gemäß Anspruch 11, **dadurch gekennzeichnet, dass** das Steuerungsgerät (4) und/oder das Eingabegerät (3) und/oder der Speicher (6) und/oder das graphische Anzeigegerät (1) und/oder das Parametermessgerät in mindestens ein mobiles Gerät (7) und/oder das Kraftfahrzeug integriert sind.

## Revendications

1. Procédé de traitement et de présentation des informations associées à une cible lors de la conduite d'un véhicule à moteur (5), dans lequel le procédé comprend les étapes suivantes :
(i) la présentation des informations (2) pouvant être sélectionnées sur un dispositif d'affichage graphique (1) au moyen d'un dispositif de commande (4),
(ii) la saisie d'une cible d'au moins un paramètre maximal des informations (2) pouvant être sélectionnées dans ledit dispositif de commande (4) au moyen d'un dispositif de saisie (3),
**caractérisé en ce qu'**il comprend en outre les étapes suivantes :
(iii) la division de la cible du paramètre maximal des informations (2) pouvant être sélectionnées en une pluralité de sections (21), au moyen du dispositif de commande (4), la pluralité de sections (21) étant des subdivisions sensiblement égales les unes aux autres,
(iv) l'affichage desdites sections (21) dans le dispositif d'affichage graphique (1),
(v) la réception des données (50) d'un dispositif de mesure du temps (55) et d'un dispositif de mesure du paramètre dans le dispositif de commande, et la présentation desdites données (50) sur le dispositif d'affichage graphique (1),
(vi) la détection qu'une section (21) a été achevée en fonction des données reçues du dispositif de mesure du paramètre,
(vii) la mémorisation des temps partiels obtenus par le dispositif de mesure du temps, le temps partiel étant le temps d'atteinte d'une section (21),
(viii) l'affichage du temps total sur le dispositif d'affichage graphique (1) et l'affichage du temps partiel sur le dispositif d'affichage graphique (1).

2. Procédé selon la revendication 1, **caractérisé en ce qu'**au moins un paramètre maximal est une vitesse maximale et/ou au moins une distance maximale.

3. Procédé selon la revendication 1, **caractérisé en ce que** le dispositif d'affichage graphique (1) affiche lesdites sections (21) dans une couleur initiale, laquelle change en une couleur différente une fois la cible affichée terminée.

4. Procédé selon la revendication 1, **caractérisé en ce que** le dispositif de mesure du temps (55) commence à mesurer lorsque le véhicule à moteur (5) commence à se déplacer et/ou lorsque l'utilisateur donne un signal par l'intermédiaire du dispositif de saisie (3) et/ ou lorsque le véhicule à moteur (5) émet un signal.

5. Procédé selon la revendication 1, **caractérisé en ce que** le dispositif de commande (4) mémorise dans la mémoire (6) les relevés de temps d'au moins une tentative précédente d'atteindre au moins une cible et ses sections (21) correspondantes.

6. Procédé selon la revendication 5, **caractérisé en ce que** le dispositif de commande (4) affiche les données de différence de temps total (502) sur le dispositif d'affichage graphique (1), pour des cibles (50) égales, depuis le début de la mesure en ce qui concerne le meilleur temps total mémorisé dans la mémoire (6) au même moment où la cible est atteinte et/ou les données de différence de temps partiel (50) pour atteindre au moins une section (21) en ce qui concerne le meilleur temps partiel (503) mémorisé dans la mémoire (6) de ladite section (21) au même point d'atteinte de la cible.

7. Procédé selon l'une quelconque des revendications 3 ou 5, **caractérisé en ce que** le dispositif d'affichage graphique (1) affiche les sections (21) et/ou les données de mesure du temps (50) dans une couleur, laquelle change en l'une ou l'autre, différente les unes des autres et par rapport à la couleur initiale, en fonction si le temps mesuré pour atteindre ladite cible et/ou section (21) est meilleur ou pire que le meilleur temps mémorisé dans la mémoire (6) pour ladite cible et/ou section (21).

8. Procédé selon l'une quelconque des revendications 1 ou 5, **caractérisé en ce que** le dispositif de commande (4) présente les données (5) relatives au temps total (501) sur le dispositif d'affichage graphique, depuis le début de la mesure et/ou le temps partiel de l'atteinte de l'au moins une section (21).

9. Procédé selon la revendication 5, **caractérisé en ce qu'**au moyen du dispositif de commande (4) au moins deux images (506, 507) sont affichées sur le dispositif d'affichage graphique (1), l'une desdites images (506) étant un affichage correspondant à l'heure à laquelle le véhicule à moteur (5) prend pour progresser vers l'atteinte de la cible, l'autre desdites images (507) étant un affichage correspondant au meilleur temps, lequel le véhicule à moteur (5) a mémorisé dans la mémoire (6) pour atteindre la même cible, et la distance entre les deux images (506, 507) étant proportionnel à l'amplitude de la différence desdits temps.

10. Procédé selon la revendication 9, **caractérisé en ce que** l'image (506) correspondant au temps, lequel le véhicule à moteur (5) prend pour progresser vers l'atteinte d'une cible, est une forme de véhicule à moteur, et que l'image (507) correspondant au meilleur temps que le véhicule à moteur (5) a mémorisé dans la mémoire (6) est une forme de véhicule à moteur ombragé, obscurci et/ou semi-transparent.

11. Dispositif de manipulation et de présentation des informations associées à une cible lors de la conduite d'un véhicule à moteur (5), comprenant au moins un dispositif de commande (4), au moins un dispositif d'affichage graphique (1), au moins un dispositif de mesure du temps (55), au moins un dispositif de mesure du paramètre, et une mémoire (6), configurée de telle sorte qu'elle met en œuvre les étapes selon la revendication 1.

12. Dispositif selon la revendication 11, **caractérisé en ce que** le dispositif de commande (4) et/ou le dispositif de saisie (3) et/ou la mémoire (6) et/ou le dispositif d'affichage graphique (1) et/ou le dispositif de mesure permettant de mesure un paramètre sont intégrés dans au moins un dispositif (7) mobile et/ou le véhicule à moteur.
